# FASCICULE DE BREVET EUROPEEN

(11) **EP 2 902 177 B1**
(45) Date de publication et mention de la délivrance du brevet: **13.03.2019**
(21) Numéro de dépôt: 15153323.9
(22) Date de dépôt: 30.01.2015
(51) Int. Cl.: B29C 70/74, B23K 26/361, B29C 67/00, B29C 69/00, B29L 31/00, A44C 27/00, B29K 21/00, G04B 45/00, G04B 47/04, B23K 103/00

(54) **Procédé d'application d'un matériau de remplissage sur un substrat présentant une surface libre à l'état fini**
Verfahren zur Aufbringung eines Füllmaterials auf ein Substrat, das eine freie Oberfläche in fertigem Zustand darstellt
Method for applying a filling material to a substrate having a free surface in a finished state

(30) Priorité: 30.01.2014 CH 1242014
(43) Date de publication de la demande: 05.08.2015
(73) Titulaire: Mestel SA, 1636 Broc (CH)
(72) Inventeur: De Boer, Philip, 1636 Broc (CH)
(74) Mandataire: e-Patent SA

(56) Documents cités:
- EP-A1- 2 363 036
- EP-A1- 2 484 628
- WO-A1-2005/123324
- CH-B1- 699 145

## Description

### Domaine technique

La présente invention concerne un procédé d'application d'un matériau de remplissage sur un substrat comportant une surface libre présentant au moins une ouverture définissant une cavité à remplir. A titre d'exemple non limitatif, le procédé selon l'invention peut notamment permettre l'application d'un tel matériau de remplissage sur un substrat défini par un composant susceptible de servir dans la réalisation d'une montre.

De manière préférée, le matériau de remplissage est avantageusement pris dans le groupe comprenant les élastomères, les résines époxy et les laques à base de polyuréthane.

Par ailleurs, le substrat peut être de toute nature permettant l'application d'un matériau du type qui vient d'être mentionné, notamment en métal ou alliage métallique, ou en céramique.

### Etat de la technique

Des procédés de ce type sont déjà connus, en particulier dans le domaine de l'horlogerie.

A titre d'exemple, le brevet EP 2316299 B1 divulgue un procédé d'application d'un élastomère sur un substrat présentant au moins un relief, de telle manière que la surface finale de la couche d'élastomère soit agencée en continuité avec la surface du relief. Ce document prévoit en outre qu'un même traitement de surface soit finalement appliqué sur l'ensemble de la surface, comme par exemple un polissage ou un satinage, pour obtenir des états de surface similaires sur le relief et à la surface de l'élastomère.

La demande de brevet EP 2363036 A1 présente un enseignement similaire à celui du brevet ci-dessus.

Toutefois, ce procédé est destiné à l'obtention de ce résultat bien particulier, c'est-à-dire obtenir un composant dont la surface présente finalement deux matières différentes avec le même état de surface. Il est en effet difficilement concevable, avec un tel procédé, de réaliser deux traitements de surface différents pour l'une et l'autre des matières concernées.

### Divulgation de l'invention

Un but de la présente invention est de proposer une alternative aux procédés connus de l'art antérieur en proposant un procédé permettant d'obtenir une alternance de matières à la surface d'un composant, les différentes matières étant susceptibles de présenter des états de surface différents.

A cet effet, le procédé d'application d'un matériau de remplissage selon l'invention comprend les étapes consistant à:
a) se munir d'un substrat présentant une surface libre à l'état fini et présentant au moins une ouverture définissant une cavité de profondeur prédéfinie,
b) déposer une couche de protection au moins sur la surface libre du substrat,
c) déposer une couche du matériau de remplissage avec une épaisseur maximale supérieure à la profondeur prédéfinie, la couche de matériau de remplissage s'étendant à l'intérieur et dans le prolongement de la cavité et sur au moins une partie de la surface libre, en étant superposée à la couche de protection et en formant un surplus de matériau de remplissage,
d) procéder à une ablation du surplus de matériau de remplissage recouvrant les portions de la couche de protection situées sur la surface finie,
e) procéder à une ablation de la portion de la couche de matériau de remplissage située en regard de l'ouverture, par traitement laser, jusqu'à ce que sa surface finale soit située au même niveau que la surface libre ou à un niveau inférieur, et
f) procéder à une ablation des portions de la couche de protection situées sur la surface finie pour faire apparaître cette dernière.

Grâce à ces caractéristiques, la surface libre du substrat à l'état fini est protégée par la couche de protection pendant l'application du matériau de remplissage et, en particulier, pendant l'étape d'ablation du surplus de matériau de remplissage. Ainsi, il est possible de traiter des composants à l'état fini sans qu'il soit nécessaire de mettre en oeuvre une étape de finition ultérieure.

Par ailleurs, la surface du matériau de remplissage peut être soumise à une finition après qu'elle ait été mise à niveau, tandis que la surface libre du substrat est toujours protégée, ce qui permet de réaliser des finitions de surface différentes sur les deux matériaux composant le substrat après application du matériau de remplissage.

Suivant un mode de réalisation avantageux, le procédé comprend l'étape supplémentaire, avant l'étape c), consistant à:
b') déposer une couche d'un agent d'adhérisation au moins sur les surfaces situées dans ladite cavité.

De manière avantageuse, on peut prévoir que l'étape d) est réalisée conjointement à l'étape e), par traitement laser.

En outre, il est possible de prévoir que la surface du matériau de remplissage située dans la cavité est structurée directement lors de la mise en oeuvre de l'étape e).

Grâce à une telle caractéristique, la surface du matériau de remplissage peut être finie avec le type de finition souhaitée directement en fin d'ablation du surplus, ce qui représente un gain de temps non négligeable.

En alternative, on peut préférablement prévoir que le procédé comprend l'étape supplémentaire, après l'étape e) consistant à:
e') mettre en oeuvre un traitement de surface de finition spécifique sur le matériau de remplissage.

En effet, tant que la couche de protection n'est pas retirée de la surface libre du substrat, un traitement de finition peut être appliqué à la surface du matériau de remplissage sans risque de causer des dommages à la surface libre du substrat.

Par ailleurs, on peut prévoir que le procédé comprend l'étape supplémentaire, avant l'étape c), consistant à:
b") mettre en oeuvre un traitement de préparation de la surface destinée à recevoir le matériau de remplissage à l'étape c).

La mise en oeuvre d'une telle étape est bien entendu optionnelle et dépend de la nature du matériau dans les régions où le matériau de remplissage est appliqué, de l'état de surface du fond de la cavité ou de la couche de protection, ainsi que de la nature du matériau de remplissage. Sa mise en oeuvre après l'application de la couche de protection garantit qu'elle ne présente pas d'impact sur l'état de la surface libre du substrat.

De manière générale, le procédé qui vient d'être décrit peut avantageusement être mis à profit pour l'application d'un matériau de remplissage sur un composant horloger définissant un substrat en métal, en alliage métallique ou en céramique.

De manière préférée, ce composant horloger comporte au moins une portion définissant un substrat présentant une surface libre dans laquelle est ménagée au moins une ouverture définissant une cavité de profondeur prédéfinie, la cavité étant remplie d'un matériau de remplissage dont la surface est située sensiblement au même niveau que la surface libre ou à un niveau inférieur et, dans lequel la surface du matériau de remplissage et la surface libre du substrat présentent des états de surface respectifs différents.

De manière avantageuse, le composant ci-dessus est tel que la surface libre du substrat présente une finition mécanique prise dans le groupe comprenant le satinage, le brossage, le polissage et le sablage, tandis que la surface du matériau de remplissage présente une finition différente prise dans le groupe comprenant le satinage, le brossage, le sablage et la micro-structuration par faisceau laser.

### Brève description des dessins

D'autres caractéristiques et avantages de la présente invention apparaîtront plus clairement à la lecture de la description détaillée d'un mode de réalisation préféré qui suit, faite en référence aux dessins annexés donnés à titre d'exemples non limitatifs et dans lesquels:
- la figure 1 représente une vue schématique partielle d'un substrat, en coupe transversale, illustrant une première étape de préparation à la mise en oeuvre d'un mode de réalisation préféré du procédé selon l'invention;
- la figure 2 représente une vue similaire à celle de la figure 1, illustrant des étapes supplémentaires de préparation à la mise en oeuvre d'un mode de réalisation préféré du procédé selon l'invention;
- la figure 3 représente une vue similaire à celle de la figure 1, illustrant une étape de mise en oeuvre d'un mode de réalisation préféré du procédé selon l'invention;
- la figure 4 représente une vue similaire à celle de la figure 1, illustrant une autre étape de mise en oeuvre d'un mode de réalisation préféré du procédé selon l'invention;
- la figure 5 représente une vue similaire à celle de la figure 1, illustrant une autre étape de mise en oeuvre d'un mode de réalisation préféré du procédé selon l'invention, et
- la figure 6 représente une vue similaire à celle de la figure 1, illustrant une autre étape de mise en oeuvre d'un mode de réalisation préféré du procédé selon l'invention.

### Mode(s) de réalisation de l'invention

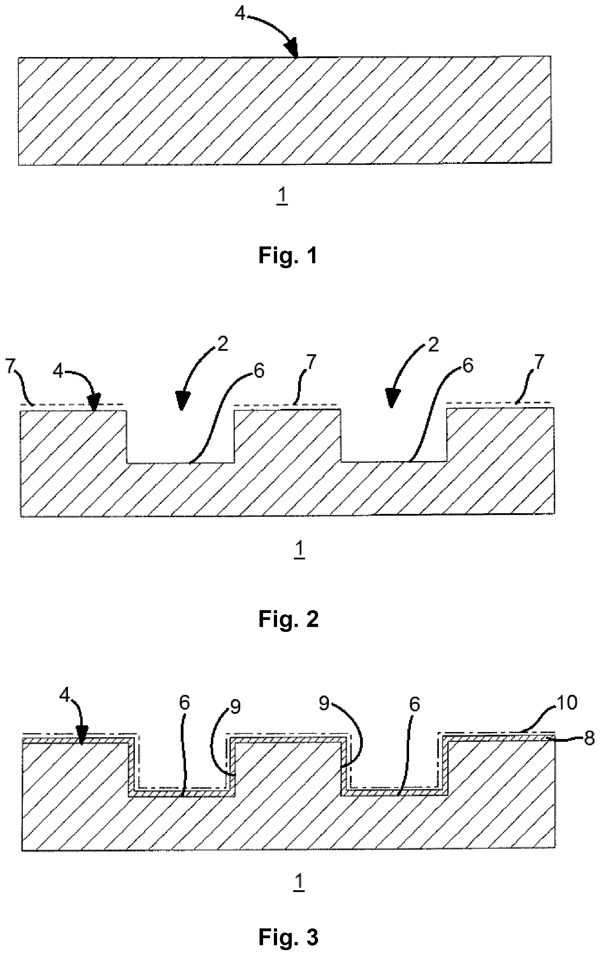

Les figures 1 à 6 illustrent le déroulement, étape par étape, d'un exemple de mise en oeuvre d'un procédé d'application d'un matériau de remplissage selon un mode de réalisation préféré de la présente invention.

La figure 1 illustre une première étape préalable au procédé selon la présente invention consistant à se munir d'un substrat 1 qui peut notamment être composé au moins partiellement d'un métal, d'un alliage métallique ou d'une céramique. Bien entendu, l'homme du métier pourra considérer d'autres matériaux adaptés à la mise en oeuvre du présent procédé.

La figure 2 illustre des étapes supplémentaires préalables au procédé selon la présente invention consistant, d'une part, à ménager au moins une ouverture 2 (ici au nombre de deux à titre illustratif non limitatif) dans la surface libre 4 du substrat 1, pour définir au moins une cavité 6, de profondeur prédéfinie. Les ouvertures 2 peuvent être réalisées par tout type d'usinage adapté, que ce soit mécanique (étampage, gravure, etc...), chimique ou au moyen d'un faisceau laser.

Typiquement, si le substrat 1 prend la forme d'un composant horloger comme une partie de boîte de montre ou de bracelet, voire un composant de mouvement horloger, la profondeur des cavités est de l'ordre de 0.1 à 0.4mm, à titre illustratif non limitatif.

D'autre part, la surface libre 4 reçoit en outre un traitement de surface de finition (schématisé par les traits interrompus 7). Là non plus, l'homme du métier ne rencontrera pas de difficulté particulière pour mettre en oeuvre un traitement de finition en fonction de ses besoins. Le traitement de finition peut notamment consister en un satinage, un brossage, un polissage, un sablage, etc....

La figure 3 illustre la mise en oeuvre de la première étape du procédé d'application d'un matériau de remplissage selon un mode de réalisation préféré de la présente invention.

Une couche de protection 8 est apposée sur le substrat 1, en tout cas au moins sur sa surface libre 4. Ici, la couche de protection est déposée de manière sensiblement uniforme sur toute la surface accessible du substrat, c'est-à-dire également à l'intérieur des cavités 6, y compris sur leurs parois 9.

A cet effet, il est avantageux de mettre en oeuvre une opération de dépôt galvanique, pour déposer un métal comme par exemple de l'argent ou du cuivre, voire un dépôt de type DLC ("Diamond Like Coating"). L'épaisseur typique préférée pour la couche de protection 8 est de l'ordre de 0.01 à 0.1mm, à titre illustratif non limitatif.

De manière optionnelle, il est possible de prévoir ensuite le dépôt d'un agent d'adhérisation 10 sur au moins une partie de la couche de protection 8, pour améliorer la tenue du matériau de remplissage qui sera appliqué ensuite. L'homme du métier ne rencontrera pas de difficulté particulière pour effectuer le choix de l'agent d'adhérisation 10, en fonction de ses propres besoins. L'épaisseur typique préférée pour la couche de l'agent d'adhérisation est de l'ordre de 5 à 10µm, à titre illustratif non limitatif.

A titre optionnel, il est possible de prévoir un traitement de surface de préparation préalablement au dépôt de l'agent d'adhérisation 10, comme par exemple un sablage ou une attaque chimique.

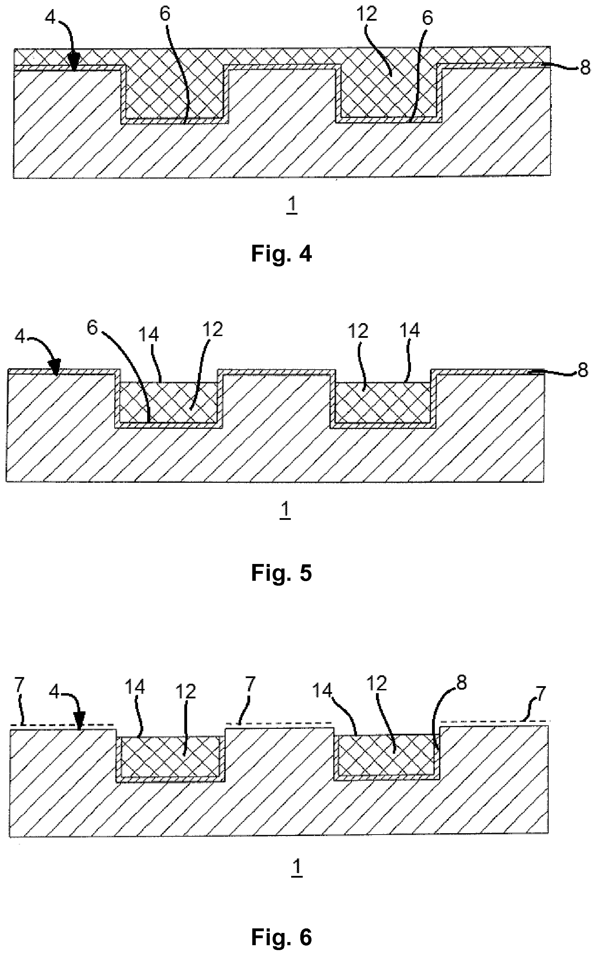

Une fois la surface du substrat 1 préparée, un matériau de remplissage 12 peut être déposé, tel qu'illustré sur la figure 4, de manière sélective ou sur toute la surface disponible (comme c'est le cas de l'illustration de la figure 4).

De manière préférée mais non limitative, le matériau de remplissage est avantageusement pris dans le groupe comprenant les élastomères, les résines époxy et les laques à base de polyuréthane.

Son application est réalisée de manière conventionnelle, comme par exemple par surmoulage, et l'épaisseur préférée de la couche obtenue est de l'ordre de 0.05 à 0.2mm au-dessus de la couche de protection 8, de manière non limitative, en formant un surplus de matériau de remplissage.

La figure 5 illustre le résultat obtenu après ablation d'une partie du matériau de remplissage.

L'opération d'ablation peut être réalisée en plusieurs étapes, par la mise en oeuvre d'une ou plusieurs méthodes conventionnelles, comme par exemple un usinage mécanique, une attaque chimique ou un traitement thermique, en particulier par faisceau laser.

De manière avantageuse, l'ablation peut être réalisée en une seule étape, au moyen d'un faisceau laser. Dans ce cas, on peut prévoir directement que la surface finale 14 du matériau de remplissage 12 est microstructurée. Il est ainsi possible de réaliser n'importe quel type de motif sur la surface finale 14 du matériau de remplissage, comme par exemple des clous de Paris voire un logo d'entreprise ou de marque.

En outre, l'ablation du surplus de matériau de remplissage 12 par faisceau laser permet une grande précision dans la réalisation de l'ablation, y compris lorsque le niveau de la surface finale 14 est situé plus bas que le niveau de la couche de protection 8, voire que celui de la surface libre 4 du substrat 1.

Suivant une variante de réalisation préférée, le niveau de la surface finale 14 du matériau de remplissage 12 est situé à environ 0.05 à 0.15mm sous le niveau de la surface libre 4 du substrat 1. Grâce à une telle caractéristique, on obtient un composant présentant une apparence originale, du fait qu'il comprend plusieurs matériaux différents, d'apparences différentes, et une tenue dans le temps améliorée. En effet, le fait que le matériau de remplissage soit agencé en retrait de la surface libre 4 du substrat 1 le rend moins exposé en cas de frottement ou de choc.

On notera qu'il est possible en complément, voire en alternative au traitement de finition par faisceau laser, de mettre en oeuvre un traitement de surface de finition sur la surface finale 14 du matériau de remplissage 12 après ablation du surplus, comme par exemple un sablage. En effet, à ce stade, la couche de protection 8 étant toujours présente, la surface libre 4 du substrat est protégée et ne peut être endommagée par un tel traitement de finition.

Lorsque le résultat souhaité est obtenu pour la surface finale 14 du matériau de remplissage 12, la couche de protection 8 peut être retirée, comme illustré sur la figure 6.

Cette opération peut par exemple être réalisée par électrolyse en fonction de la nature de la couche de protection 8.

Ainsi, la surface libre 4 du substrat 1 est remise à nu, avec la finition 7 qu'elle présentait avant la mise en oeuvre du procédé selon l'invention.

L'intérêt économique de ce procédé est évident puisque celui-ci permet de traiter des composants à l'état fini et donc de gagner du temps de production, en particulier dans la fabrication de grandes séries. A l'inverse, le présent procédé permet également de personnaliser des composants finis, du type dont la surface présente une ou des cavités, en leur apposant un matériau de remplissage, sans toutefois altérer la finition des portions qui ne seront finalement pas recouvertes.

La description qui précède s'attache à décrire un mode de réalisation particulier à titre d'illustration non limitative et, l'invention n'est pas limitée aux techniques ou aux produits usuels particuliers mentionnés en relation avec les étapes de préparation du substrat ou les étapes d'application du matériau de remplissage. L'homme du métier ne rencontrera pas de difficulté particulière pour adapter le contenu de la présente divulgation à ses propres besoins.

## Revendications

1. Procédé d'application d'un matériau de remplissage (12), pris dans le groupe comportant les élastomères, les résines époxy et les laques à base de polyuréthane, sur un substrat (1) comprenant les étapes consistant à:
a) se munir d'un substrat (1) présentant une surface libre (4) à l'état fini et présentant au moins une ouverture (2) définissant une cavité (6) de profondeur prédéfinie,
b) déposer une couche de protection (8) au moins sur ladite surface libre (4),
c) déposer une couche dudit matériau de remplissage (12) avec une épaisseur maximale supérieure à ladite profondeur prédéfinie, ladite couche de matériau de remplissage (12) s'étendant à l'intérieur et dans le prolongement de ladite cavité (6) et sur au moins une partie de ladite surface libre (4), en étant superposée à ladite couche de protection (8) et en formant un surplus de matériau de remplissage (12),
d) procéder à une ablation dudit surplus de matériau de remplissage (12) recouvrant les portions de ladite couche de protection (8) situées sur ladite surface finie (4),
e) procéder à une ablation de la portion de ladite couche de matériau de remplissage (12) située en regard de ladite ouverture (2), par traitement laser, jusqu'à ce que sa surface finale (14) soit située au même niveau que ladite surface libre (4) ou à un niveau inférieur, et
f) procéder à une ablation des portions de ladite couche de protection (8) situées sur ladite surface finie (4) pour faire apparaître cette dernière.

2. Procédé selon la revendication 1, comprenant l'étape supplémentaire, avant l'étape c), consistant à:
b') déposer une couche d'un agent d'adhérisation (10) au moins sur les surfaces situées dans ladite cavité (6).

3. Procédé selon la revendication 1 ou 2, **caractérisé en ce que** l'étape d) est réalisée conjointement à l'étape e), par traitement laser.

4. Procédé selon l'une quelconque des revendications précédentes, **caractérisé en ce que** ladite surface finale (14) du matériau de remplissage (12) située dans ladite cavité (6) est structurée lors de la mise en oeuvre de l'étape e).

5. Procédé selon l'une quelconque des revendications 1 à 3, **caractérisé en ce qu'**il comprend l'étape supplémentaire, après l'étape e) consistant à:
e') mettre en oeuvre un traitement de surface de finition sur ledit matériau de remplissage (12).

6. Procédé selon l'une quelconque des revendications 1 à 5, **caractérisé en ce qu'**il comprend l'étape supplémentaire, avant l'étape c), consistant à:
b") mettre en oeuvre un traitement de préparation de la surface destinée à recevoir ledit matériau de remplissage (12) à l'étape c).

7. Procédé selon l'une quelconque des revendications précédentes, **caractérisé en ce qu'**il est mis en oeuvre pour l'application d'un matériau de remplissage (12) sur un composant horloger définissant un substrat en métal, en alliage métallique ou en céramique.

8. Procédé selon l'une quelconque des revendications précédentes, **caractérisé en ce que** la mise en oeuvre de l'étape e), ou de toute autre étape supplémentaire éventuelle de traitement de surface de finition mise en oeuvre tandis que ladite surface libre (4) est toujours protégée, est réalisée de telle manière que ladite surface finale (14) dudit matériau de remplissage (12) et ladite surface libre (4) du substrat (1) présentent des états de surface respectifs différents.

9. Procédé selon la revendication 7, ladite surface libre (4) du substrat (1) présentant une finition mécanique prise dans le groupe comprenant le satinage, le brossage, le polissage et le sablage, **caractérisé en ce que** la mise en oeuvre de l'étape e), ou de toute autre étape supplémentaire éventuelle de traitement de surface de finition mise en oeuvre tandis que ladite surface libre (4) est toujours protégée, est réalisée de telle manière que ladite surface finale (14) dudit matériau de remplissage (12) présente une finition différente prise dans le groupe comprenant le satinage, le brossage, le sablage et la micro-structuration par faisceau laser.

## Patentansprüche

1. Verfahren zur Anwendung eines Füllmaterials (12) aus der Gruppe von Elastomeren, Epoxidharzen und Lacken auf Polyurethan-Basis auf einem Substrat (1), das folgende Schritte umfasst:
a) Bereitstellung eines Substrats (1) mit einer freien Oberfläche (4) im fertigen Zustand, mit mindestens einer Öffnung (2), die einen Hohlraum (6) mit einer festgelegten Tiefe definiert,
b) Aufbringen einer Schutzschicht (8) zumindest auf dieser freien Oberfläche,
c) Aufbringen einer Schicht aus diesem Füllmaterial (12) mit einer Maximaldicke, die diese festgelegte Tiefe übersteigt, wobei sich die oben genannte Schicht des Füllmaterials (12) nach innen, in die Verlängerung dieses Hohlraums (6) und über mindestens einen Teil dieser freien Oberfläche (4) erstreckt und auf dieser Schutzschicht (8) liegt und damit einen Überschuss des Füllmaterials (12) bildet,
d) Ablation dieses überschüssigen Füllmaterials (12), das die Teile dieser Schutzschicht (8) bedeckt, die sich auf dieser fertigen Oberfläche (4) befinden,
e) Ablation des Teils dieser Schicht des Füllmaterials (12), das sich gegenüber dieser Öffnung (2) befindet durch Laserbearbeitung, bis sich die endgültige Oberfläche (14) auf derselben Ebene wie diese freie Oberfläche (4) oder tiefer befindet, und
f) Ablation der Teile dieser Schutzschicht (8), die sich auf der fertigen Oberfläche (4) befinden, damit diese letztere zum Vorschein kommt.

2. Verfahren nach Anspruch 1, das den zusätzlichen Schritt vor Schritt c) umfasst; dieser besteht aus:
b') dem Auftragen einer Schicht Haftvermittler (10), zumindest auf den Oberflächen, die sich in diesem Hohlraum (6) befinden.

3. Verfahren nach Anspruch 1 oder 2, **dadurch gekennzeichnet, dass** Schritt d) in Verbindung mit Schritt e) durch Laserbearbeitung durchgeführt wird.

4. Verfahren nach einem der vorgenannten Ansprüche, **dadurch gekennzeichnet, dass** diese endgültige Oberfläche (14) des Füllmaterials (12) in diesem Hohlraum (6) bei der Durchführung von Schritt e) gebildet wird.

5. Verfahren nach einem der Ansprüche 1 bis 3, **dadurch gekennzeichnet, dass** es nach Schritt e) den zusätzlichen Schritt umfasst; dieser besteht aus:
e') einer Behandlung der Oberflächenbeschaffenheit bei diesem Füllmaterial (12).

6. Verfahren nach einem der Ansprüche 1 bis 5, **dadurch gekennzeichnet, dass** es vor Schritt c) den zusätzlichen Schritt umfasst; dieser besteht aus:
b") einer Behandlung zur Vorbereitung der Oberfläche, die in Schritt c) in Kontakt mit diesem Füllmaterial (12) kommt.

7. Verfahren nach einem der vorgenannten Ansprüche, **dadurch gekennzeichnet, dass** es zur Anwendung eines Füllmaterials (12) bei einer Komponente für Uhren durchgeführt wird, die ein Substrat aus Metall, Metalllegierung oder Keramik darstellt.

8. Verfahren nach einem der vorgenannten Ansprüche, **dadurch gekennzeichnet, dass** die Durchführung von Schritt e) oder ggf. eines anderen zusätzlichen Schritts zur Behandlung der Oberflächenbeschaffenheit, während diese freie Oberfläche (4) immer geschützt bleibt, so erfolgt, dass diese endgültige Oberfläche (14) dieses Füllmaterials (12) und diese freie Oberfläche (4) des Substrats (1) jeweils unterschiedliche Oberflächenzustände darstellen.

9. Verfahren nach Anspruch 7, wobei diese freie Oberfläche (4) des Substrats (1) mechanisch behandelt wird, und zwar durch Satinieren, Abbürsten, Polieren und Sandstrahlen, **dadurch gekennzeichnet, dass** die Durchführung von e) oder ggf. eines weiteren zusätzlichen Schritts zur Behandlung der Oberflächenbeschaffenheit, während diese freie Oberfläche (4) immer geschützt bleibt, so erfolgt, dass diese endgültige Oberfläche (14) dieses Füllmaterials (12) eine andere Beschaffenheit hat, erreicht durch Satinieren, Abbürsten, Sandstrahlen und Mikrostrukturierung unter Verwendung von Laserstrahlen.

## Claims

1. Method of applying a filler material (12), selected from the group comprising elastomers, epoxy resins and polyurethane-based lacquers, to a substrate (1) comprising the steps of:
a) providing a substrate (1) having a free surface (4) in the finished state and having at least one opening (2) defining a cavity (6) of predefined depth,
b) depositing a protective layer (8) on at least the said free surface (4),
c) depositing a layer of the said filler material (12) with a maximum thickness greater than the said predefined depth, the said filler material layer (12) extending within and in extension of the said cavity (6) and on at least a portion of the said free surface (4), being superimposed on the said protective layer (8) and forming a surplus of filler material (12),
d) proceeding to an ablation of the said surplus of filler material (12) covering the portions of the said protective layer (8) located on the said finished surface (4),
e) proceeding to the ablation of the portion of the said filler material layer (12) opposite of the said opening (2), by laser treatment, until its final surface (14) is located at the same level as the said free surface (4) or at a lower level, and
f) proceeding to the ablation of the portions of the said protective layer (8) on the said finished surface (4) to reveal the latter.

2. Method according to claim 1, comprising the additional step, prior to step c), of:
b') depositing a layer of an adhesion agent (10) at least in the surfaces located in the said cavity (6).

3. Method according to claim 1 or 2, **characterised in that** step d) is carried out jointly with step e), by laser treatment.

4. Method according to any one of the preceding claims, **characterised in that** the said final surface (14) of the filler material (12) located in the said cavity (6) is structured during the implementation of step e).

5. Method according to any one of claims 1 to 3, **characterised in that** it comprises the additional step, after step e), of:
e') implementing a finishing surface treatment on the said filler material (12).

6. Method according to any one of claims 1 to 5, **characterised in that** it comprises the additional step, prior to step c), of:
b") implementing a preparation treatment of the surface receiving the said filler material (12) in step c).

7. Method according to any one of the preceding claims, **characterised in that** it is implemented for the application of a filler material (12) on a watch component defining a substrate of metal, metal alloy or ceramic.

8. Method according to any one of the preceding claims, **characterised in that** the implementation of step e), or any other optional additional finishing surface treatment step implemented while the said free surface (4) is still protected, is carried out in such a way that the said final surface (14) of the said filler material (12) and the said free surface (4) of the substrate (1) have different respective surface states.

9. Method according to claim 7, the said free surface (4) of the substrate (1) having a mechanical finishing selected from the group comprising satin-finishing, brushing, polishing and sanding, **characterised in that** the implementation of step e), or any other optional additional finishing surface treatment step implemented while the said free surface (4) is still protected, is carried out in such a way that the said final surface (14) of the said filler material (12) has a different finish selected from the group comprising satin-finishing, brushing, sanding and laser micro-structuring.
